# EUROPEAN PATENT SPECIFICATION

(11) **EP 3 383 677 B1**
(45) Date of publication and mention of the grant of the patent: **25.08.2021**
(21) Application number: 16809533.9
(22) Date of filing: 02.12.2016
(51) Int. Cl.: B60C 11/24

(54) **SYSTEM FOR MONITORING THE CONDITION OF TYRES**
REIFENÜBERWACHUNGSSYSTEM
SYSTÈME DE SURVEILLANCE D' UN PNEUMATIQUE

(30) Priority: 02.12.2015 IT UB20156068
(43) Date of publication of application: 10.10.2018
(73) Proprietor: WRIGGLE SOLUTIONS S.r.l.s., 56123 Pisa (IT)
(72) Inventor: GHOLAMZADEH NASRABADI, Arash, 50053 Empoli (Firenze) (IT); BALSINI, Alessio, 56048 Volterra (Pisa) (IT); CALVARESI, Davide, 63082 Castel di Lama (Ascoli Piceno) (IT); BIONDI, Alessandro, 50051 Castelfiorentino (Firenze) (IT)
(74) Representative: Di Gennaro, Sergio
(86) International application number: PCT/IB2016/057298
(87) International publication number: WO 2017/093957

(56) References cited:
- WO-A2-2007/127220
- DE-A1-102009 052 168
- US-A1- 2011 024 010

## Description

### Field of the invention

The present invention concerns a system for monitoring tyres, which allows carrying out monitoring of the extent of wear in real time and quickly identifying particular conditions of wear of tyres that precede sudden failures or irreversible damages.

### State of the art

In terms of road safety, tyres play a fundamental role. Tyres, and in particular their tread, indeed represent the only point of contact with the road surface that vehicles have, whatever their weight and size. The operating conditions and state of tyres, and in particular the thickness of their tread, can have a great impact on the performance of the vehicle on which they are mounted, and can be the cause of accidents, even serious ones, for example following sudden failure or bursting of the tyre.

A low thickness of the tread reduces the performance of the vehicle in terms of fuel consumption but also in terms of safety in extreme conditions, like sudden braking or driving in the wet: the control of the vehicle and grip indeed substantially decrease if the tyre is very worn and the thickness of the tread is low, while the probability of skidding increases due to aquaplaning. For this reason, there are legally set limits for the thickness of the tread, past which the tyre can no longer be used safely, and sanctions are imposed if the standard is not met. Despite this, checks carried out on vehicles in circulation constantly highlight the lack of attention that drivers pay to the condition of the tyres. For example, from over 9000 checks carried out in seven regions of Italy (Basilicata, Campania, Friuli Venezia Giulia, Marche, Molise, Lazio and Liguria) between mid-May and mid-June 2015, it was found that between 5 and 10% of the vehicles checked had a degree of wear of the tyres such as to be able to classify them as "bald tyres", and over 3% of vehicles has tyres visibly damaged on the sidewalls. The problems that vehicles of this type can encounter, as stated above, range from increased fuel consumption, to low grip on a wet road or during braking, to the possibility of failure, bursting or breaking of the tyre during use with potentially disastrous consequences for the driver and passengers. Events like these, although currently commonly considered unpredictable and unavoidable, on the other hand to a large extent come down to wearing phenomena of the tyre.

For these reasons, it is essential to keep track of the degree of wear of the tyres mounted on vehicles. To do this, inside the grooves of the tread of the tyres there are generally projections distributed more or less evenly in the central area of the tread; such projections represent tyre wear indicators, making it possible to visually assess the extent of wear according to how low the depth of the grooves of the tread with respect to the projection appears to be. In practice, when, following wear, the grooves of the tread have reached in depth the thickness of the projections, it is necessary to replace the tyre. A system of this type, as well as being subject to a certain tolerance due to the visual assessment, also presumes awareness and a sense of responsibility of the driver, which unfortunately does not correspond to reality and in any case only indicates that the legal limit has been reached.

As far as the Applicant is aware, there is also currently only one other system effectively in use for checking the extent of wear of tyres, based on the use of special tyres equipped with coloured inserts in the body of the tyre having a colour contrasting with that of the compound of the tyre, at a height such that the coloured insert only becomes visible at the moment when the tread has reached the maximum tolerable wear limit. Such a system also clearly suffers from the same drawbacks highlighted above for the projections in the grooves of the tread, as well as the repercussions on the production process of the tyre. Examples of coloured indicators of this type are for example described in European patent application No. EP0312256 and in US patent No. US5704999.

WO 2007/127220 describes a wireless sensor system for obtaining data from an elastomeric article.

US 2011/024010 describes tyres with enhanced performance that use active material actuation.

The state of the art also describes more or less complex systems for checking the condition of vehicle tyres, including their degree of wear, based for example on the use of accelerometers inside the tyre, to detect the instantaneous values of the acceleration and braking parameters, which are then compared with corresponding values in predetermined wear conditions of the tyre. As far as the Applicant is aware such systems have not yet found application in daily use of vehicles given their complexity and cost.

Therefore, there is still a great need in the field to have systems suitable for precisely and efficiently detecting the extent of wear of tyres in order to monitor in real time the condition of the tyres, optimising the performance of the vehicle, improving in general driving safety and also preventing sudden failure of tyres.

### Summary of the invention

The present invention thus proposes to provide a system for monitoring the condition of tyres that solves the problems highlighted above for known systems, making it possible to monitor in real time the wear of tyres and/or to detect their damage with a system having great precision and reliability, that does not rely on the will and awareness of the driver, with relative complexity and production cost. The system of the present invention is also applicable to any type of vehicle.

The main purpose of the present invention is therefore to provide a system that allows monitoring in real time the condition of wear of tyres for vehicles and/or to detect damage to them, even in cases in which wear and/or damage cannot be detected by the naked eye or with the systems currently known, and that at the same time does not excessively worsen the production costs of tyres and/or compromise the safety of vehicles.

This and other purposes are accomplished by the system for monitoring the condition of tyres for vehicles according to the present invention, whose essential characteristics are defined by the first of the independent claims attached hereto, by the related method and by the tyre having the essential characteristics respectively defined in independent claims 7 and 11.

Further important characteristics of the system, of the method and of the tyre according to the invention are defined in the dependent claims.

### Brief description of the drawings

The characteristics and advantages of the system, of the method and of the tyre for monitoring the condition of tyres according to the invention, will become clearer from the following description of embodiments thereof given as a non-limiting example with reference to the attached drawings, in which:
- Figure 1 shows a tyre and some components of the system according to the present invention in an embodiment thereof;
- Figure 2 shows an operating diagram of the system of the present invention according to two different exemplary applications thereof.

### Detailed description

In the present invention, the term monitoring the "condition of a tyre" of a vehicle means monitoring the degree of wear of the tyre and/or possible damage thereto, carried out in real time while the vehicle is moving.

The system for monitoring the condition of tyres for vehicles according to the invention comprises:
- a sensor associated with at least a portion of tread and based on extrinsically conductive polymers (or ECP);
- a supply system of electric current, capable of supplying electrical energy to the aforementioned sensor;
- a data processing central unit (or UCE);
- means for reading data of electrical resistance in the aforementioned sensor, and for transmitting it to the aforementioned central unit;
- set of algorithms for the interpretation of the data of electrical resistance detected by comparison with a reference data of electrical resistance corresponding to a normal condition of the tread, which does not have any sign of wear or damage, in order to identify and quantify a possible condition of wear of the tread.

In the present invention, the aforementioned interpretation of the detected data of electrical resistance by comparison with a reference data may be preferably carried out by filtering and data-processing techniques.

In the present invention the term "sensor associated with at least a portion of tread and based on extrinsically conductive polymers (or ECP)" means a portion of tread in which the polymer or the polymeric mixture of the compound of the tyre are doped with one or more conductive materials, as described in detail hereinafter, so as to create a portion consisting of ECP in the tread.

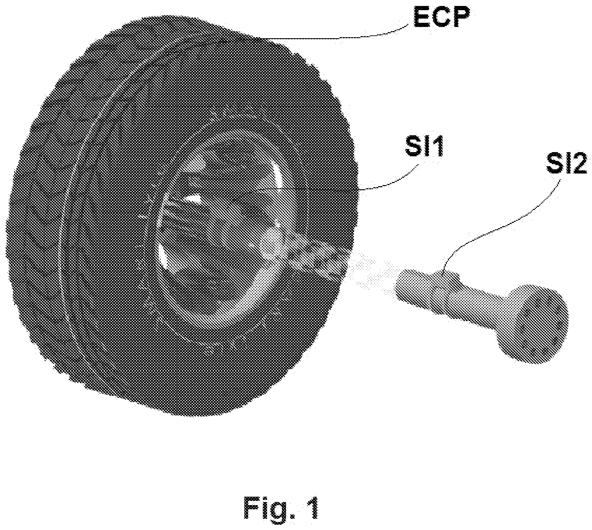

In a particular embodiment illustrated in Figure 1, particularly suitable for monitoring, in addition to wear, possible damage to the tread of a tyre, the system of the invention also comprises at least two inertial sensors SI1 and SI2 arranged in proximity to the hub of the wheel on which the tyre under monitoring is mounted at a predetermined distance between each other that depends on the type of vehicle, means for collecting data of frequency response read by such sensors and transmitting it to the aforementioned processing central unit, and a set of algorithms for the interpretation of such data at the aim of identifying possible damages to the tyre. More specifically, a first inertial sensor SI1 is arranged as close as possible to the hub of the wheel, whereas a second inertial sensor SI2 is arranged in line with S11, typically in a position close to the centre of the vehicle.

The term "extrinsically conductive polymers" in the present invention means the polymers of the compound that normally constitutes the tyre suitably doped with one or more conductive materials, for example selected from electrically conductive metals and organic-based conductive materials, for example selected from the group consisting of copper, aluminium, gold, and conductive carbon-based materials, such as graphite and carbon nanotubes; a further example of conductive carbon-based material of possible use in the present invention is carbon black Preferred materials for the doping are carbon nanotubes. The percentage of doping conductive material can for example be comprised between 1% and 40% by weight with respect to the total weight of the composition of the tyre, preferably between 1% and 20% by weight and more preferably it is equal to about 10%; according to another preferred embodiment of the invention the percentage doping material is 5% by weight. In the system of the invention the tread of the tyre, or in any case its layers closest to the surface whose condition, i.e. the degree of wear and possible damage, it is wished to monitor, consist of an extrinsically conductive polymer as described above, so as to be able to be crossed by electric current giving a measurement of its electrical resistance that varies as a function of the amount of ECP crossed by the electric current, both in terms of section and in terms of length. On the other hand, the innermost part of the tyre, without doping, does not conduct the electric current or in any case has insignificant conductivity.

The sensor based on ECP according to an embodiment of the present invention can for example consist of rings of ECP in the surface layers of the tyre whose condition it is wished to monitor. According to an alternative embodiment of the present invention the sensor based on ECP can consist of multiple core samples of ECP immersed in the polymeric compound of the tyre. The sensor based on ECP can be evenly distributed in the whole tyre tread to be monitored, or only in its surface layers or in predetermined areas thereof.

A further aspect of the present invention concerns, in addition to the aforementioned system, also a tyre in which the tread or in any case the layers closest to the surface of the tyre, whose condition is wished to monitor, is associated with a sensor based on extrinsically conductive polymers (or ECP), with the specifications described above.

The system for supplying electric current comprised in the system of the invention is preferably a wireless supply system, i.e. a system that uses electromagnetic induction techniques to supply electrical energy to the sensor based on ECP with the purpose of measuring the electrical resistance thereof to the passage of current. Alternatively, the supply system of the system of the invention can for example be a power generator included in the tyre itself, whose energy, generated by the forces applied on the tyre during its rotation, it exploits. In another embodiment of the present invention, the system can be connected to a power generator installed on the rim of wheel via a wired link.

The means for reading and transmitting the data of electrical resistance to the processing central unit are comprised in the tyre and consist for example of a minimal processing unit with extremely low energy consumption that transmits the data read to the processing central unit via radio waves. The processing central unit analyses the data received in real time thanks to specific algorithms and mathematical models integrated in them.

According to a preferred embodiment of the system of the invention, the system also comprises at least one temperature sensor positioned inside the tyre and specific algorithms in the processing central unit for detecting and interpreting the temperature data detected.

The variation of electrical resistance picked up by the sensor based on ECP will give a measurement of the wear of the surface layers in which the sensor is arranged; in practice, thanks to a continuous reading of the values of electrical resistance of the sensor ECP, it will be possible to reconstruct any variation in the condition of the tread of the tyres.

An additional temperature sensor can be arranged inside the tyre in order to improve the accuracy of the measurement by introducing thermal models of electrical conductivity of the ECP. Such analysis is carried out in real time by specific algorithms (AU) carried out on the UCE.

With particular reference to the embodiment of Figure 1, the system of the invention also comprises at least two inertial sensors arranged on the axis of the vehicle on which the tyre under evaluation is mounted; a first inertial sensor SI1 is arranged in proximity to the hub of the wheel and a second inertial sensor SI2 is positioned at a variable distance from the first sensor SI1 depending on the type of vehicle on which the present system is used. From these sensors, frequency signals of the vibrations are detected, in particular the data collected on the sensor SI1 is used to produce a frequency analysis of the vibrations on the hub of the wheel, carried out in a differential manner with respect to the data collected by the sensor SI2 to exclude the noise produced by the inevitable vibrations of any moving vehicle and isolate only the component of vibrations of interest relative to the rotation of the wheel, and therefore of the tyre under monitoring, detected by the sensor S11. When the tyre in question is in a damaged condition or operates in non-ordinary conditions, the signal detected by the sensor SI1 will have a new frequency content with respect to the natural one of the tyre that operate in ordinary conditions, and such a variation of the signal will be an indication of the condition of the tyre. A set of algorithms is comprised in the system in order to process the signals detected in real time and identify potential critical conditions of the tyre.

The present system is therefore capable of carrying out measurements and ensuring monitoring in real time the wear of a tyre and its relative performance degradation, as well as of identifying particular states and operating conditions of a tyre, i.e. damage, which can precede sudden failure, and/or irreversible damage to the tyre causing situations of danger to the vehicle and the passengers.

Thanks to the present system such disastrous consequences of failure or explosion of a tyre can be avoided and prevented, and more in general it is possible to prevent any inappropriate use of tyres mounted on a vehicle.

The data collected by the processing central unit described above can be aggregated and used for the following two main purposes:
1. real time notification to the driver of the vehicle of possible damage to one or more tyres, of anomalous operating conditions thereof and/or of a high degree of wear thereof through sound signals and/or indicators or lights on the dashboard of the vehicle;
2. transmission to a remote station for processing the data, for example to improve the management of fleets of company vehicles or to enable dedicated insurance policies, being able to obtain information from the data in question on the driving style of the driver, on possible collisions involving the vehicle, as well as tracking the route of the vehicle, and the like.

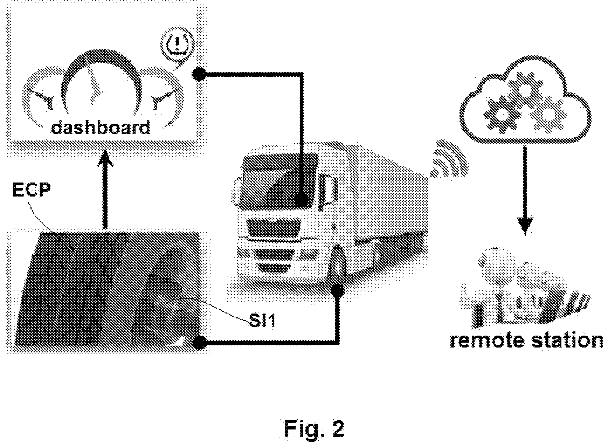

Figure 2 schematically illustrates these two types of application, the left part of the figure representing the first application described above, i.e. notifying the driver of the vehicle, and the right part representing the transmission of data to a remote processing centre.

A further aspect of the present invention concerns a method for monitoring the condition of a tread of a tyre for vehicles, comprising the steps of:
i) passing an electric current in a sensor based on extrinsically conductive polymers (ECP) and associated with said tyre tread;
ii) acquiring continuously, periodically or sporadically, data of electrical resistance in said sensor, and transferring said data to a processing central unit;
iii) comparing said measured data of electrical resistance with a reference data of electrical resistance corresponding to a normal condition, without any signs of wear and damages, of the tread and detecting said data variations.

Depending on the variation obtained between measured data and reference data, the method of the invention can provide for the emission of sound and/or light signals to signal possible variations between a measured data and the reference data that exceed a predetermined threshold.

According to a particular embodiment of the present invention, the method described above can also comprise the continuous acquisition of data of frequency response detected by inertial sensors arranged in proximity to the hub of the wheel on which the tyre under monitoring is mounted, and comparing it with a reference data corresponding to a normal condition to detect possible variations. Depending on whether such variations exceed a predetermined threshold value the method may or may not also comprise a step of emitting sound and/or light signals to signal such variations.

A first and main advantage of the system and method according to the present invention is given by the ability to provide precise data in real time of the wear of the tyres mounted on a vehicle, so as to increase the awareness of the driver of the degree of reliability of the tyres of his vehicle, also being able to detect conditions of wear or damage of tyres undetectable with current systems found on the market, and not visible to the naked eye. Consequently, a further advantage of the present system and method is the prevention of accidents caused by tyres operating in non-ordinary conditions, which reduce the grip thereof to the road surface, increasing braking distance and skidding due to aquaplaning, to the point of causing failure of the tyre itself in the most serious cases.

A further advantage of the system of the present invention is represented by the fact that all of the components of the system represent an optimal compromise between the requirements of quality and a relatively low cost.

Yet another advantage of the system of the present invention is represented by the fact that the data provided by the system can be collected and used for statistical and research purposes in the design and manufacture of innovative tyres having improved performance.

Yet another advantage of the system of the present invention is represented by the fact that the data provided by the system can be used not only to signal to the driver in real time, as described above, but can also be collected and transmitted to a data processing centre, for example in order to improve the management of fleets of company vehicles or to enable dedicated insurance policies, by monitoring the driving style of the driver, detecting collisions, tracing the route of the vehicle, and so on.

The last but not less important advantage is the monitoring of the condition of the tyres aimed at reducing fuel consumption, and therefore also polluting emissions released by the vehicle, as well as reducing operating costs.

The present invention has been described up to here with reference to a preferred embodiment. It should be understood that there may be other embodiments deriving from the same inventive core, as defined by the scope of protection of the claims given hereinafter.

## Claims

1. A system for monitoring the condition of a tread of a tyre for vehicles, comprising:
a sensor associated to at least a portion of said tread and consisting of extrinsically conductive polymers (ECP);
a supply system of electric current, able to provide electrical energy to said sensor;
means for reading data of electrical resistance by said sensor by, and for their transmission to said central unit
a data processing central unit (UCE);
**characterized in that**
said means for reading data are means able to continuously reading the variation of electrical resistance picked up by said sensor which gives a measurement of the wear of the surface layers in which the sensor is arranged,
set of algorithms for the interpretation of said measured variations of electrical resistance by comparison with a reference data of electrical resistance corresponding to a normal condition of said tread, at the aim of identifying and quantifying a condition of wear of said tread.

2. The system according to claim 1, further comprising at least two inertial sensors (S11) and (SI2) able to measure data of frequency response of vibrations at a wheel hub, on which wheel said tyre is mounted; means for collecting the data of frequency response detected by said sensors and for transmitting them to said processing central unit, and a set of algorithms for interpreting said data by comparison with a reference data of frequency response corresponding to a normal condition of said tread, at the aim of identifying possible damages.

3. The system according to any one of the preceding claims, wherein said sensor based on ECP polymers consists of a portion of said tread, whose condition is under monitoring, wherein the polymer or polymeric mixture that constitutes the tyre is doped with one or more conductive materials.

4. The system according to claim 3, wherein said polymer or polymeric mixture is doped with one or more conductive material selected from the group consisting of copper, aluminum, gold, and conductive carbon-based materials.

5. The system according to claim 3, wherein said polymer or polymeric mixture is doped with carbon nanotubes.

6. The system according to any one of the claims 3 to 5, wherein said polymer or polymeric mixture is doped with one or more conductive materials in amount of approximately 10% by weight with respect to the total weight.

7. A method for monitoring the condition of a tread of a tyre for vehicles, comprising the steps of:
i) letting an electrical current flow in a sensor based on extrinsically conductive polymers (ECP) and associated to said tread of a tyre;
ii) acquiring continuously, reading the variation of electrical resistance picked up by said sensor which gives a measurement of the wear of the surface layers in which the sensor is arranged, and transferring said data to a processing central unit;
iii) comparing said measured variations of electrical resistance with a reference data of electrical resistance corresponding to a normal condition, without any signs of wear and damages, of the tread and detecting said data variations.

8. The method according to claim 7, further comprising the steps of acquiring continuously data of frequency response detected by inertial sensors positioned at a wheel hub, on which wheel said tyre under monitoring is mounted, and of comparing said detected data of frequency response with a reference data corresponding to a normal condition detecting then any possible variations.

9. The method according to claim 7 or 8, further comprising the emission of sound and/or light signals for signalling to a driver of said vehicle possible variations between said detected data of electric resistance and/or detected data of frequency response and said respective reference data, which variations exceed a predetermined threshold.

10. The method according to claim 7 or 8, further comprising the transmission of said detected data of electrical resistance and/or detected data of frequency response and of said possible variations with respect to a respective reference data to a remote station for data processing.

11. A tyre comprising a sensor associated to at least a portion of tread of said tyre, wherein said sensor consists of extrinsically conductive polymers (ECP), said sensor when provided with electrical energy measures the electrical resistance in to the tyre transmitting it to a central unit, the variation of electrical resistance picked up by said sensor gives a measurement of the wear of the surface layers in which the sensor is arranged, said measured variations of electrical resistance by comparison with a reference data of electrical resistance corresponding to a normal condition of said tread, aim to identify and quantify a condition of wear of said tread.

12. The tyre according to claim 11, wherein said sensor based on ECP polymers consists of a portion of said tread, whose condition is under monitoring, wherein the polymer or polymeric mixture that constitutes the tyre is doped with one or more conductive materials.

13. The tyre according to claim 12, wherein said polymer or polymeric mixture is doped with one or more conductive material selected from the group consisting of copper, aluminium, gold, and conductive carbon-based materials.

14. The tyre according to claim 12, wherein said polymer or polymeric mixture is doped with carbon nanotubes.

15. The tyre according to any one of the claims 12 to 14, wherein said polymer or polymeric mixture is doped with one or more conductive materials in amount of approximately 10% by weight with respect to the total weight.

## Patentansprüche

1. System zum Überwachen des Zustands einer Lauffläche eines Reifens für Fahrzeuge, umfassend:
einen Sensor, der zumindest einem Teil der Lauffläche zugeordnet ist und aus extrinsisch leitfähigen Polymeren (ECP) besteht;
ein Versorgungssystem für elektrischen Strom, das in der Lage ist, den Sensor mit elektrischer Energie zu versorgen;
Mittel zum Ablesen von Daten des elektrischen Widerstands durch den Sensor, und zu deren Übertragung an die Zentraleinheit;
eine Datenverarbeitungs-Zentraleinheit (UCE); **dadurch gekennzeichnet, dass**,
die Mittel zum Ablesen von Daten, Mittel sind, welche in der Lage sind die vom Sensor empfangene Änderung des elektrischen Widerstands kontinuierlich abzulesen,
die ein Maß für den Verschleiß der Oberflächenschichten ergibt, in denen der Sensor angeordnet ist;
ein Satz von Algorithmen zur Interpretation der gemessenen Änderungen des elektrischen Widerstands durch Vergleich mit einem Referenzdatum des elektrischen Widerstands, das einem Normalzustand der Lauffläche entspricht, mit dem Ziel, einen Verschleißzustand der Lauffläche zu identifizieren und zu quantifizieren.

2. System nach Anspruch 1, ferner umfassend mindestens zwei Trägheitssensoren (S11) und (S|2), die in der Lage sind, Daten des Frequenzgangs der Schwingungen an einer Radnabe zu messen, an welchem Rad der Reifen montiert ist; Mittel zum Sammeln der von den Sensoren erfassten Daten des Frequenzgangs und zum Übertragen derselben an die Verarbeitungs-Zentraleinheit; und einen Satz von Algorithmen zum Interpretieren der Daten durch Vergleich mit einem Referenzdatum des Frequenzgangs, das einem Normalzustand der Lauffläche entspricht, mit dem Ziel, mögliche Schäden zu erkennen.

3. System nach irgendeinem der vorhergehenden Ansprüche, wobei der auf ECP-Polymeren basierende Sensor aus einem Teil der Lauffläche besteht, dessen Zustand überwacht wird, wobei das Polymer oder die Polymermischung, die den Reifen bildet, mit einem oder mehreren leitfähigen Materialien dotiert ist.

4. System nach Anspruch 3, wobei das Polymer oder die Polymermischung mit einem oder mehreren leitfähigen Materialien, ausgewählt aus der Gruppe bestehend aus Kupfer, Aluminium, Gold und leitfähigen Materialien auf Kohlenstoffbasis, dotiert ist.

5. System nach Anspruch 3, wobei das Polymer oder die Polymermischung mit Kohlenstoffnanoröhren dotiert ist.

6. System nach irgendeinem der Ansprüche von 3 bis 5, wobei das Polymer oder die Polymermischung mit einem oder mehreren leitfähigen Materialien in einer Menge von ungefähr 10 Gew.-%, bezogen auf das Gesamtgewicht, dotiert ist.

7. System zum Überwachen des Zustands einer Lauffläche eines Reifens für Fahrzeuge, umfassend folgende Schritte:
i) einen elektrischen Strom in einen Sensor fließen lassen, der auf extrinsisch leitfähigen Polymeren (ECP) basiert und der Lauffläche eines Reifens zugeordnet ist;
ii) kontinuierliches Erfassen, Ablesen der vom Sensor empfangenen Änderung des elektrischen Widerstands, die ein Maß für den Verschleiß der Oberflächenschichten ergibt, in denen der Sensor angeordnet ist, und Übertragen dieser Daten an eine Verarbeitungs-Zentraleinheit;
iii) Vergleichen der gemessenen Änderungen des elektrischen Widerstands mit einem Referenzdatum des elektrischen Widerstands, das einem Normalzustand der Lauffläche ohne Anzeichen von Verschleiß und Beschädigungen entspricht, und Erfassen der Datenänderungen.

8. Verfahren nach Anspruch 7, ferner umfassend die Schritte des kontinuierlichen Erfassens von Daten des Frequenzgangs, die von Trägheitssensoren erfasst werden, die an einer Radnabe positioniert sind, an welchem Rad der überwachte Reifen montiert ist, und des Vergleichens der erfassten Daten des Frequenzgangs mit einem Referenzdatum, das einem Normalzustand entspricht, in dem dann alle möglichen Änderungen erfasst werden.

9. Verfahren nach Anspruch 7 oder 8, ferner umfassend das Aussenden von Ton- und/oder Lichtsignalen, um einem Fahrer des Fahrzeugs mögliche Änderungen zwischen den erfassten Daten des elektrischen Widerstands und/oder erfassten Daten des Frequenzgangs und den jeweiligen Referenzdaten zu signalisieren, welche Änderungen einen vorbestimmten Schwellenwert überschreiten.

10. Verfahren nach Anspruch 7 oder 8, ferner umfassend die Übertragung der erfassten Daten des elektrischen Widerstands und/oder der erfassten Daten des Frequenzgangs und der möglichen Änderungen in Bezug auf ein jeweiliges Referenzdatum an eine entfernte Station zur Datenverarbeitung.

11. Einen Reifen, umfassend einen Sensor, der mindestens einem Teil der Lauffläche des Reifens zugeordnet ist, wobei der Sensor aus extrinsisch leitfähigen Polymeren (ECP) besteht; wobei, wenn der Sensor mit elektrischer Energie versorgt wird, dieser den elektrischen Widerstand in dem Reifen misst und an eine Zentraleinheit überträgt; die vom Sensor empfangene Änderung des elektrischen Widerstands ein Maß für den Verschleiß der Oberflächenschichten ergibt, in denen der Sensor angeordnet ist; die gemessenen Änderungen des elektrischen Widerstands durch Vergleich mit einem Referenzdatum des elektrischen Widerstands, das einem Normalzustand der Lauffläche entspricht, mit dem Ziel, einen Verschleißzustand der Lauffläche zu identifizieren und zu quantifizieren.

12. Der Reifen nach Anspruch 11, wobei der auf ECP-Polymeren basierende Sensor aus einem Teil der Lauffläche besteht, dessen Zustand überwacht wird, wobei das Polymer oder die Polymermischung, die den Reifen bildet, mit einem oder mehreren leitfähigen Materialien dotiert ist.

13. Der Reifen nach Anspruch 12, wobei das Polymer oder die Polymermischung mit einem oder mehreren leitfähigen Materialien, ausgewählt aus der Gruppe bestehend aus Kupfer, Aluminium, Gold und leitfähigen Materialien auf Kohlenstoffbasis, dotiert ist.

14. Der Reifen nach Anspruch 12, wobei das Polymer oder die Polymermischung mit Kohlenstoffnanoröhren dotiert ist.

15. Der Reifen nach irgendeinem der Ansprüche von 12 bis 14, wobei das Polymer oder die Polymermischung mit einem oder mehreren leitfähigen Materialien in einer Menge von ungefähr 10 Gew.-%, bezogen auf das Gesamtgewicht, dotiert ist.

## Revendications

1. Système de surveillance de l'état d'une bande de roulement d'un pneumatique pour véhicules, comprenant :
un capteur associé à au moins une partie de ladite bande de roulement et composé de polymères extrinsèquement conducteurs (ECP) ;
un système d'alimentation en courant électrique, capable de fournir de l'énergie électrique audit capteur ; des moyens de lecture de données de résistance électrique par ledit capteur par et pour leur transmission à ladite unité centrale une unité centrale de traitement de données (UCE) **caractérisée en ce que**
lesdits moyens de lecture des données sont des moyens capables de lire en continu la variation de résistance électrique saisie par ledit capteur qui indique une mesure de l'usure des couches de surface dans lesquelles le capteur est disposé,
une série d'algorithmes pour l'interprétation desdites variations mesurées de résistance électrique en comparaison avec une donnée de référence de résistance électrique correspondant à un état normal de ladite bande de roulement, dans le but d'identifier et quantifier un état de l'usure de ladite bande de roulement.

2. Système selon la revendication 1, comprenant en outre au moins deux capteurs inertiels (S11) et (S|2) capables de mesurer des données de réponse en fréquence de vibrations au niveau d'un moyeu de roue, sur laquelle roue ledit pneumatique est monté ; des moyens de collecte de données de réponse en fréquence détectées par lesdits capteurs et pour leur transmission à ladite unité centrale de traitement, et une série d'algorithmes pour l'interprétation desdites données en comparaison avec une donnée de référence de réponse en fréquence correspondant à un état normal de ladite bande de roulement, dans le but d'identifier des dommages éventuels.

3. Système selon l'une quelconque des revendications précédentes, où ledit capteur basé sur des polymères ECP est composé d'une partie de ladite bande de roulement, dont l'état est sous surveillance, où le polymère ou mélange polymère qui constitue le pneumatique est dopé avec un ou plusieurs matériaux conducteurs.

4. Système selon la revendication 3, où ledit polymère ou mélange polymère est dopé avec un ou plusieurs matériaux conducteurs choisis parmi le groupe composé de cuivre, aluminium, or et matériaux à base de carbone conducteurs.

5. Système selon la revendication 3, où ledit polymère ou mélange polymère est dopé avec des nanotubes de carbone.

6. Système selon l'une quelconque des revendications de 3 à 5, où ledit polymère ou mélange polymère est dopé avec un ou plusieurs matériaux conducteurs en quantité d'environ 10% en poids par rapport au poids total.

7. Procédé de surveillance de l'état d'une bande de roulement d'un pneumatique pour véhicules, comprenant les étapes consistant à :
i) laisser un courant électrique circuler dans un capteur basé sur des polymères extrinsèquement conducteurs (ECP) et associé à ladite bande de roulement d'un pneumatique ;
ii) acquérir en continu, lire la variation de résistance électrique saisie par ledit capteur qui indique une mesure de l'usure des couches de surface dans lesquelles le capteur est disposé, et transférer lesdites données à une unité centrale de traitement ;
iii) comparer lesdites variations mesurées de résistance électrique avec une donnée de référence de résistance électrique correspondant à un état normal, sans aucun signe d'usure ou de dommage, de la bande de roulement et détecter lesdites variations de données.

8. Procédé selon la revendication 7, comprenant en outre les étapes d'acquisition en continu de données de réponse en fréquence détectées par des capteurs inertiels positionnés au niveau du moyeu de roue, sur laquelle roue ladite bande de roulement sous surveillance est montée, et de comparaison desdites données détectées de réponse en fréquence avec une donnée de référence correspondant à un état normal détectant ensuite toute variation éventuelle.

9. Procédé selon la revendication 7 ou 8, comprenant en outre l'émission de signaux sonores et/ou lumineux pour signaler à un conducteur dudit véhicule des variations éventuelles entre lesdites données détectées de résistance électrique et/ou des donnés détectées de réponse en fréquence et lesdites données de référence respectives, lesquelles variations dépassent un seul prédéterminé.

10. Procédé selon la revendication 7 ou 8, comprenant en outre la transmission desdites données détectées de résistance électrique et/ou des données détectées de réponse en fréquence et desdites variations éventuelles par rapport à une donnée de référence respective à une station distante pour le traitement des données.

11. Pneumatique comprenant un capteur associé à au moins une partie de bande de roulement dudit pneumatique, où ledit capteur est composé de polymères extrinsèquement conducteurs (ECP), ledit capteur lorsque pourvu d'énergie électrique mesure la résistance électrique dans le pneumatique en la transmettant à une unité centrale, la variation de résistance électrique saisie par ledit capteur indique une mesure de l'usure des couches de surface dans lesquelles le capteur est disposé, lesdites variations mesurées de résistance électrique en comparaison avec une donnée de référence de résistance électrique correspondant à un état normal de ladite bande de roulement, pour identifier et quantifier un état d'usure de ladite bande de roulement.

12. Pneumatique selon la revendication 11, où ledit capteur basé sur des polymères ECP est composé d'une partie de ladite bande de roulement, dont l'état est sous surveillance, où le polymère ou mélange polymère qui constitue le pneumatique est dopé avec un ou plusieurs matériaux conducteurs.

13. Pneumatique selon la revendication 12, où ledit polymère ou mélange polymère est dopé avec un ou plusieurs matériaux conducteurs choisis parmi le groupe composé de cuivre, aluminium, or et matériaux à base de carbone conducteurs.

14. Pneumatique selon la revendication 12, où ledit polymère ou mélange polymère est dopé avec des nanotubes de carbone.

15. Pneumatique selon l'une quelconque des revendications de 12 à 14, où ledit polymère ou mélange polymère est dopé avec un ou plusieurs matériaux conducteurs en quantité d'environ 10% en poids par rapport au poids total.
